# EUROPÄISCHE PATENTSCHRIFT

(11) **EP 2 638 313 B1**
(45) Veröffentlichungstag und Bekanntmachung des Hinweises auf die Patenterteilung: **01.10.2014**
(21) Anmeldenummer: 11770094.8
(22) Anmeldetag: 12.10.2011
(51) Int. Cl.: B05B 15/02, F16K 31/04, A01M 7/00

(54) **VENTIL FÜR EINE LANDWIRTSCHAFTLICHE SPRITZMASCHINE**
VALVE FOR AN AGRICULTURAL SPRAYING MACHINE
VANNE POUR MACHINE DE PULVÉRISATION AGRICOLE

(30) Priorität: 08.11.2010 DE 102010051580
(43) Veröffentlichungstag der Anmeldung: 18.09.2013
(73) Patentinhaber: Altek Ges. Für Allgem. Landtechnik MbH, 72108 Rottenburg-Hailfingen (DE)
(72) Erfinder: MUELLER, Norbert, 53175 Bonn (DE)
(74) Vertreter: Witte, Weller & Partner Patentanwälte mbB
(86) Internationale Anmeldenummer: PCT/EP2011/067831
(87) Internationale Veröffentlichungsnummer: WO 2012/062525

(56) Entgegenhaltungen:
- EP-A1- 0 761 084
- EP-A1- 0 992 726
- EP-A2- 2 153 710
- DE-A1-102004 011 737
- DE-U1-202006 018 756
- US-A- 5 772 114

## Beschreibung

Die vorliegende Erfindung betrifft ein Ventil für eine landwirtschaftliche Spritzmaschine, das eine Durchflussmenge eines Spritzmittels in Abhängigkeit einer Ventilstellung steuern kann, mit einem elektrisch betriebenen Aktuator zum Einstellen der Ventilstellung.

Ein derartiges Ventil ist aus der EP0992726 A1 oder DE 10 2004 011 737 A1 bekannt.

In der Landwirtschaft spielt die Zuverlässigkeit einzelner Gerätekomponenten eine große Rolle. Sämtliche Gerätekomponenten werden im Betrieb, wie beispielsweise auf einem Feld, starken mechanischen Schwingungen ausgesetzt. Die Gerätekomponenten müssen gegenüber solchen mechanischen Schwingungen robust sein, um eine lange Lebensdauer gewährleisten zu können. Dies ist insbesondere deshalb notwendig, da Reparaturen am Einsatzort der landwirtschaftlichen Maschinen gar nicht oder nur schwer durchführbar sind. Somit muss in schwerwiegenden Fehlerfällen häufig der Betrieb zu Reparaturzwecken ganz eingestellt werden.

Für das Bespritzen von Feldern mit einem Spritzmittel werden Spritzmaschinen eingesetzt, die eine Vielzahl von Spritzdüsen aufweisen. Das jeweilige Spritzmittel wird mittels der Spritzdüsen auf das Feld abgegeben. Bei dem Spritzmittel kann es sich beispielsweise um Pestizide oder Düngemittel handeln. Typischerweise sind die Spritzdüsen an einem Ausleger der Spritzmaschine angeordnet. Dieser Ausleger hat eine sehr große Breite, so dass eine möglichst große Fläche in kurzer Zeit bespritzt werden kann. Daraus folgt, dass eine hohe Anzahl von Spritzdüsen gleichzeitig benötigt wird, die entlang des Auslegers gleichmäßig angeordnet sind. Die Spritzmaschine weist sowohl den Ausleger als auch eine Landmaschine auf. Der Ausleger ist direkt an der Landmaschine befestigt oder befindet sich an einem Anhänger, der von der Landmaschine gezogen wird.

Die Ventile werden typischerweise mittels pneumatischer oder hydraulischer Steuerungen betrieben. Diese bieten eine hohe Robustheit gegenüber mechanischen Schwingungen. Ein Nachteil ist die Notwendigkeit von Versorgungsleitungen, die - gegenüber elektrischen Leitungen - einen sehr großen Bauraum benötigen. Zudem muss eine Vorrichtung zur Druckerzeugung sowie ein Druckspeicher bereitgestellt werden, die weiteren Bauraum benötigen und zusätzliche Kosten bei Herstellung der Spritzmaschine erzeugen. Weiter ist die Steuerung auf pneumatischer und hydraulischer Basis gegenüber elektrischen Aktuatoren relativ langsam, so dass die Flexibilität des Ansteuerns gegenüber elektrischen Aktuatoren begrenzt ist. Ein weiterer Nachteil ist, dass die Spritzdüsen nur in großen Gruppen gesteuert werden können, da eine individuelle Ansteuerung sehr aufwendig in der Umsetzung ist.

Durch die Verwendung von GPS-Systemen in der Landmaschine kann eine Steuerung der Spritzdüsen automatisch erfolgen. Ein derartiges Verfahren ist beispielsweise aus EP 0 761 084 A1 bekannt. Ein Bordcomputer der Spritzmaschine erfasst und speichert die Positionen der Spritzmaschine während des Betriebs. Gleichzeitig wird erfasst, wie viel Spritzmittel in welchem Bodenbereich verteilt wird. Ragt der Ausleger während des Betriebs erneut in einen bereits bespritzten Bodenbereich herein, dann schaltet der Bordcomputer automatisch die entsprechenden Spritzdüsen ab. Auf diese Weise wird verhindert, dass ein Bodenbereich zuviel Spritzmittel erhält.

Eine elektrische Steuermöglichkeit der Spritzdüsen an dem Ausleger bietet hier den Vorteil, dass diese sehr schnell gesteuert werden können. Somit kann entlang des Auslegers sehr schnell eingestellt werden, ob und wie stark das Spritzmittel abgegeben wird. Dadurch wird sehr effizient und genau verhindert, dass bereits bespritzte Ackerflächen erneut bespritzt werden, wenn die Spritzmaschine wendet oder einem Hindernis ausweicht. Zudem können Ventile mit elektrischen Aktuatoren sehr einfach individuell angesteuert werden, woraus sich eine sehr genaue Steuerung ergibt.

Aus der vorgenannten DE 10 2004 011 737 A1 geht ein Düsenmodul hervor, das an einem Ausleger befestigt wird. Das Düsenmodul besitzt eine Versorgungsleitung, die zu einem steuerbaren Ventil führt. Das Ventil ist ausgangsseitig mit einer oder mehreren Spritzdüsen verbunden. Es kann hierzu pneumatisch oder elektrisch angesteuert werden, um das Spritzmittel von einer Versorgungsleitung zu der Spritzdüse zu leiten und dort zu verspritzen.

US 5,772,114 erwähnt ein elektrisches System zum Ansteuern von Spritzdüsen. Jedoch ist zudem beschrieben, dass das pneumatische System deshalb zu bevorzugen wäre, da Luftversorgungsleitungen robuster als elektrische Leitungen seien.

EP 2 153 710 A2 beschreibt einen Einsatz elektrisch ansteuerbarer Steuerventile in einer Feldspritze. Diese dienen dazu, die Durchflussmenge zu den Spritzdüsen in Abhängigkeit der Fahrgeschwindigkeit der Landmaschine zu steuern. Hierzu werden einige wenige elektrische Steuerventile eingesetzt, die jeweils eine Teilbreite des Auslegers mit einer Vielzahl von Spritzdüsen im Gesamten steuern.

Um eine genaue Ansteuerung der Spritzdüsen erreichen zu können, bedarf es einer entsprechend großen Anzahl einzeln ansteuerbarer Ventile. Die Verwendung einer großen Anzahl an Ventilen mit elektrischen Aktuatoren führt zu einem sehr großen Strombedarf. Insbesondere dann, wenn alle Ventile gleichzeitig angesteuert werden. Dies kann bei breiten Auslegern mit besonders vielen Ventilen dazu führen, dass das Bordsystem in der Landmaschine überlastet wird.

US 4,813,604 weist auf dieses Problem hin. Es wird vorgeschlagen, zunächst nur eine Hälfte der Ventile gleichzeitig anzusteuern und anschließend die zweite Hälfte anzusteuern. Dies hat jedoch den Nachteil, dass ein Ansteuern der Ventile nur in Abhängigkeit des momentanen Steuerzustands der Ventile erfolgen kann. In anderen Worten, die Möglichkeiten zum Ansteuern der Ventile werden begrenzt und die Geschwindigkeit des Ansteuerns wird dadurch verringert.

Ein weiterer Aspekt bei der Verwendung von Ventilen mit elektrischen Aktuatoren ist, dass die Ventile typischerweise als Öffnerventile ausgebildet sein sollen, d.h. dass die Ventile ohne Zutun automatisch geschlossen sind. In einem Fehlerfall kann so ein unkontrollierbares Auslaufen des Spritzmittels sicher verhindert werden.

Das deutsche Gebrauchsmuster 1 813 813 sowie die Offenlegungsschrift DE 10 2004 011 737 schlagen daher Ventile vor, die mittels einer Druckfeder dann automatisch geschlossen werden, wenn es nicht durch externen Energieaufwand geöffnet wird. Die Verwendung einer solchen Feder in einem elektrisch betriebenen Ventil führt jedoch dazu, dass beim Öffnen der Ventile zusätzliche elektrische Energie aufgewendet werden muss, um die Federkraft der Feder zu überwinden.

Es ist daher eine Aufgabe der vorliegenden Erfindung, ein Ventil anzugeben, das eine robuste und sichere Anwendung im Agrarbereich gewährleistet, wobei das Ventil sehr schnell gesteuert werden können soll.

Diese Aufgabe wird gemäß einem Aspekt der Erfindung durch ein Ventil der eingangs genannten Art gelöst, das einen elektrischen Energiespeicher aufweist, der elektrische Energie zum Betreiben des Aktuators bereitstellt.

Gemäß einem weiteren Aspekt der Erfindung wird diese Aufgabe durch ein Verfahren zum Betreiben eines Ventils für landwirtschaftliche Spritzmaschinen gelöst, mit den Schritten:
- Bereitstellen eines elektrisch betriebenen Aktuators, zum Einstellen einer Ventilstellung,
- Bereitstellen eines elektrischen Energiespeichers, zum Speichern von elektrischer Energie für den Aktuator,
- Speichern der elektrischen Energie in dem elektrischen Energiespeicher und
- Steuern einer Durchflussmenge eines Spritzmittels in Abhängigkeit der Ventilstellung.

Das neue Ventil besitzt damit einen Energiespeicher, der die elektrische Energie bereitstellt, um den Aktuator zu betätigen. Damit steht für den Aktuator bei Bedarf sofort Energie aus dem elektrischen Energiespeicher bereit und muss nicht direkt aus der Stromversorgung bezogen werden. Somit können Spitzenstromwerte in der Stromversorgung verhindert werden. Nach einer Ansteuerung des Ventils wird der Energiespeicher aus der Stromversorgung wieder geladen, und zwar vorzugsweise über eine Ladezeitdauer, die wesentlich länger ist als die Entladezeitdauer beim Betätigen des Aktors. Hierfür kann ein wesentlich geringer Strom von der Stromversorgung bezogen werden, als er bei einem direkten Betrieb des Ventils über die Stromversorgung benötigt werden würde. Die Höhe der notwendigen Stromaufnahme für jeden Energiespeicher zum Aufladen kann zudem in Abhängigkeit einer verfügbaren Ladezeit angepasst werden. Die maximal mögliche Ladezeit ergibt sich daraus, wann das Ventil wieder einsatzbereit sein muss. Die minimal notwendige Ladezeit wird von den physikalischen Eigenschaften des Energiespeichers bestimmt. Insgesamt lässt sich auf diese Weise die Stromaufnahme für eine Vielzahl von erfindungsgemäßen Ventilen an einem Ausleger minimieren. In bevorzugten Ausführungsformen kann die Stromaufnahme auf einen Wert kleiner oder gleich 0,5 Ampere, bevorzugt kleiner oder gleich 0,2 Ampere und besonders bevorzugt kleiner oder gleich 0,1 Ampere eingestellt werden. Somit lässt sich als Stromversorgung das Bordnetz der Spritzmaschine einsetzen, ohne dass eine Gefahr einer Überlastung vorliegt. Weiter bietet die Verwendung des Energiespeichers den Vorteil, dass eine Notabschaltung zu jeder Zeit im Betrieb des Ventils gewährleistet ist.

Daraus ergeben sich die Vorteile, dass die gesamte Ansteuerung der Ventile sehr robust gegenüber äußeren Einflüssen ist, da eine Betriebsbereitschaft der einzelnen Ventile unabhängig von dem momentanen Zustand der Stromversorgung herbeigeführt und gewährleistet ist. Zudem wird erreicht, dass die Ventile bei geladenem Energiespeicher sehr schnell und zuverlässig geschaltet werden können.

Die Kapazität des Energiespeichers ist so bemessen, dass der Aktuator mindestens einen vollständigen Schaltvorgang ohne externe Energiezufuhr vornehmen kann. Der Energiespeicher hat eine Kapazität, die mindestens zwei und bevorzugt mindestens drei Schaltvorgänge gewährleistet. Hierdurch wird ein besonders robuster Betrieb gesichert, da ein Schaltvorgang ohne erneute Ladung wiederholt werden kann. Dies ist von Vorteil, um beispielsweise ein verschmutztes und schwergängiges Ventil freizurütteln.

In besonders bevorzugten Ausführungsformen werden zwei oder mehr Energiespeicher eingesetzt, um die Betriebsbereitschaft des Ventils zu gewährleisten. Hieraus folgt, dass die Kapazität der einzelnen Energiespeicher geringer gegenüber einem einzigen Energiespeicher ausfallen kann, was sich vorteilhaft auf den Bauraumbedarf auswirkt. Außerdem gewährleistet die Redundanz eine höhere Ausfallsicherheit.

Unter einer landwirtschaftlichen Spritzmaschine wird hier insbesondere eine Landmaschine verstanden, die einen Ausleger mit einer Vielzahl an Spritzdüsen aufweist. In bevorzugten Ausführungsformen ist der Ausleger direkt an der Landmaschine angeordnet oder an einem Anhänger angeordnet, der von der Landmaschine gezogen wird.

Vorzugsweise besitzt der Ausleger eine Vielzahl an Düsenmodulen auf. Jedes Düsenmodul weist einen Spritzdüsenhalter, ein Ventil und eine Spritzdüse auf. Das Düsenmodul kann auch eine Gruppe von Spritzdüsen besitzen, die gemeinsam von dem Ventil gesteuert werden. Die Spritzdüsen eines gemeinsamen Düsenmoduls bespritzen dabei zumindest teilweise einen gemeinsamen Bodenbereich mit dem Spritzmittel. Die Verwendung des Düsenmoduls hat den Vorteil einer sehr kompakten Bauweise. Für eine Reparatur oder Wartung kann das gesamte Düsenmodul sehr schnell und einfach ausgetauscht werden.

In dieser Ausführungsform wird entlang des Auslegers eine Vielzahl von Düsenmodulen und damit von Ventilen eingesetzt, die durch den elektrischen Aktuator sehr einfach und schnell individuell gesteuert werden können. Dadurch wird eine besonders genaue Dosierung des Spritzmittels auf einem Feld ermöglicht, da nicht nur ganze Abschnitte an Spritzdüsen des Auslegers zu- oder abgeschaltet werden können, sondern die Düsenmodule entlang des Auslegers mit der Genauigkeit des Abstands der Düsenmodule gesteuert werden können.

Somit ist die Aufgabe vollständig gelöst.

In einer weiteren Ausgestaltung ist der Energiespeicher ein elektrischer Kondensator.

In dieser Ausgestaltung ist der Energiespeicher als elektronisches Bauteil in Form eines Kondensators ausgebildet. Vorteil hierbei ist, dass Kondensatoren nur einen geringen Bauraum benötigen und gleichzeitig eine hohe Speicherkapazität bieten. Ferner sind Kondensatoren in vielerlei Ausführungen für industrielle Zwecke verfügbar, was zu einem kostengünstigen Aufbau des Ventils führt. Zudem sind Kondensatoren sehr robust gegenüber Umwelteinflüssen, was die Robustheit des Ventils gegenüber Umwelteinflüsse erhöht. Weiter bieten Kondensatoren den Vorteil, dass sie, beispielsweise gegenüber chemischen Energiespeichern, sehr schnell geladen werden können. Insgesamt lässt sich so durch die Verwendung von Kondensatoren als Energiespeicher ein sehr robuster, kompakter und kostengünstiger Aufbau des Ventils realisieren.

In einer weiteren Ausgestaltung der Erfindung weist das Ventil einen schaltbaren elektrischen Bypass auf, der eine Stromversorgung mit dem Aktuator verbinden kann.

Diese Ausgestaltung weist eine schaltbare elektrische Umgehungsleitung auf - den Bypass, der den Energiespeicher umgeht. Durch Schalten des Bypasses kann der Aktuator direkt mit der Stromversorgung verbunden werden. Vorzugsweise wird gleichzeitig der Energiespeicher von der Stromversorgung getrennt. Dadurch kann die Stromversorgung den Aktuator betreiben, ohne gleichzeitig den Energiespeicher laden zu müssen. Hierdurch wird die Stromaufnahme des Ventils auf ein notwendiges Mindestmaß beschränkt. Weiter ist es zum Schutz des Energiespeichers vorteilhaft, wenn der Aktuator gleichzeitig von dem Energiespeicher getrennt wird.

Das Schalten des Bypasses erfolgt insbesondere dann, wenn der Energiespeicher nicht ausreichend geladen ist oder einen Defekt aufweist. In bevorzugten Ausführungsformen wird der Bypass durch eine schaltbare Diode gesteuert.

In einer weiteren Ausgestaltung ist der Aktuator ein Elektromotor.

In dieser Ausgestaltung wird als Aktuator ein Elektromotor eingesetzt. Die Verwendung des Elektromotors hat den Vorteil, dass er das Ventil in eine bestimmte Position stellen und anschließend in dieser Position verweilen kann. Besonders vorteilhaft ist, dass der Elektromotor während des Verweilens keinen zusätzlichen Strom benötigt, wie dies beispielsweise bei einem Magnetventil mit einer Rückstellfeder der Fall ist.

Zudem kann durch die Verwendung des Elektromotors eine besonders genaue Ansteuerung und damit eine besonders genaue Dosierung der abgegebenen Spritzmittelmenge erfolgen. In bevorzugten Ausführungsformen ist der Elektromotor als Schrittmotor ausgeführt. Diese haben den Vorteil, dass sie Steuersignale besonders sicher, schnell und sehr exakt umsetzen.

In einer besonders bevorzugten Ausführungsform treibt der Elektromotor eine Spindel an, die ein Gewinde aufweist. Das Gewinde der Spindel wirkt mit einem Gegengewinde des Ventilstößels zusammen. Durch Drehen der Spindel kann der Ventilstößel senkrecht zur Drehrichtung bewegt werden. Somit lässt sich die Position des Ventilstößels und damit die Durchflussmenge sehr exakt durch den Elektromotor einstellen.

In einer weiteren Ausgestaltung ist eine Steuer- und Auswerteeinheit vorgesehen, die dazu ausgebildet ist, den elektrischen Energiespeicher zu laden.

In dieser Ausgestaltung wird das Laden des Energiespeichers von der Steuer- und Auswerteeinheit gesteuert. Diese beinhaltet elektronische Bauteile wie beispielsweise ICs, die einen Ladezustand des Energiespeichers erfassen und diesen bei Bedarf laden. Die Steuer- und Auswerteeinheit verhindert durch Einstellen der benötigten Strommenge, dass das Bordnetz überlastet wird. Vorzugsweise wird der Ladezustand des Energiespeichers von der Steuer- und Auswerteeinheit dauerhaft überwacht und das Laden in Abhängigkeit des Ladezustands beendet. Hierdurch bildet die Steuer- und Auswerteeinheit gleichzeitig einen Überladungsschutz.

In bevorzugten Ausführungsformen wird auch der Bypass und/oder der Aktuator durch die Steuer- und Auswerteeinheit gesteuert. Insgesamt lässt sich so ein besonders kompakter und modularer Aufbau des Ventils erreichen.

In einer weiteren Ausgestaltung weist das erfindungsgemäße Ventil ein Ventilgehäuse auf, wobei die Steuer- und Auswerteeinheit in dem Ventilgehäuse angeordnet ist.

In dieser Ausgestaltung ist die Steuer- und Auswerteeinheit in das Ventil integriert. Hierzu weist das Ventilgehäuse vorzugsweise einen gesonderten Bauraum auf, in dem die Steuer- und Auswerteeinheit angeordnet ist. Dies kann beispielsweise ein Seitenflansch mit einem Deckel sein. Vorteilhaft ist hierbei, dass die Steuer- und Auswerteeinheit besonders gut vor Umwelteinflüssen geschützt wird. Zudem ist die Steuer- und Auswerteeinheit in dem gesonderten Bauraum gut für Wartungs- und Reparaturzwecke erreichbar.

In besonders bevorzugten Ausführungsformen ist der Bauraum schmutz- und wasserdicht ausgebildet. Die Steuer- und Auswerteeinheit wird dadurch besonders gut vor Umwelteinflüssen geschützt. Dies führt zu einer weiteren Verbesserung der Robustheit des Ventils.

Ein weiterer Vorteil ist, dass sich die Steuer- und Auswerteeinheit in der Nähe des Aktuators befindet. Dadurch können Versorgungs- und Steuerleitungen von der Steuer- und Auswerteeinheit zu dem Aktuator sehr kurz ausgelegt werden. Damit wird ein Energieverlust zwischen der Steuer- und Auswerteeinheit und dem Aktuator minimiert, wodurch zusätzlich Strom eingespart werden kann. Ferner wird aufgrund der Nähe eine Fehleranfälligkeit, beispielsweise durch mechanische Beschädigungen von Versorgungs- oder Steuerleitungen zu dem Aktuator, minimiert. Insgesamt wird so ein besonders zuverlässiger Einsatz des Ventils gewährleistet.

In einer weiteren Ausgestaltung weist die Steuer- und Auswerteeinheit den Energiespeicher auf.

In dieser Ausgestaltung ist der Energiespeicher in die Steuer- und Auswerteeinheit integriert. Dies bietet den Vorteil, dass die Steuer- und Auswerteeinheit mit dem Energiespeicher in einem Herstellungsprozess gemeinsam hergestellt werden kann, so dass eine kostengünstige Produktion herbeigeführt wird. Zudem ergibt sich der zusätzliche Vorteil, dass ein modularer Aufbau des Ventils erreicht wird. Beispielsweise können im Reparaturfall alle relevanten Steuerkomponenten gleichzeitig und einfach durch ein Modul ausgetauscht werden.

In einer weiteren Ausbildung der Erfindung ist die Steuer- und Auswerteeinheit dazu ausgebildet, die Ventilstellung zu bestimmen.

In dieser Ausbildung überwacht die Steuer- und Auswerteeinheit zusätzlich die Ventilstellung. In einer bevorzugten Ausführungsform wird die Ventilstellung anhand eines elektrischen Stroms bestimmt, der vom Aktuator aufgenommen wird. Zunächst wird eine Initialisierung des Ventils bei Inbetriebnahme durchgeführt. Die Initialisierung bringt den Ventilstößel in eine definierte Anfangsstellung. Dies lässt sich beispielsweise durch ein vollständiges Schließen oder Öffnen des Ventils erreichen. Anhand des elektrischen Stroms kann eine relative Bewegung des Ventilstößels ermittelt werden. In Abhängigkeit der konkreten Ausgestaltung des Ventils sind mechanische Zwangsbedingungen zu berücksichtigen, wie beispielsweise eine Gewindesteigung der Spindel. Die Ventilstellung kann dann auf Basis der Anfangsstellung und der relativen Bewegung bestimmt werden.

Ein Vorteil ist, dass Endschalter für den Ventilstößel eingespart werden können. Endschalter werden typischerweise dafür eingesetzt, die Endpositionen des Ventilstößels zu überwachen. Sie werden von dem Ventilstößel dann geschlossen, wenn dieser in eine der Endpositionen gelangt. Durch die Bestimmung der Ventilstellung mittels der Steuer- und Auswerteeinheit können so Bauteile und zusätzliche Signalleitungen eingespart werden, was eine wirtschaftliche Herstellung ermöglicht. Zudem werden auf diese Weise mögliche Fehlerquellen beseitigt, so dass sich insgesamt ein robusteres Ventil ergibt.

Ein weiterer Vorteil ist, dass anhand der Ventilstellung Rückschlüsse auf die Durchflussmenge an Spritzmittel durch das Ventil gezogen werden können. Dadurch kann ein Durchflussmesser am Ventil ersetzt werden. Die Information über die Durchflussmenge kann so von der Steuer- und Auswerteinheit oder einer externen Bedieneinheit überwacht werden. Die Bestimmung der Durchflussmenge ermöglicht eine noch genauere Abgabe von Spritzmittel für jeden Bodenbereich. Insbesondere wird in Verbindung mit einem GPS-System ermöglicht, dass nicht nur die bereits bespritzten Bodenbereiche gespeichert werden, sondern auch, welche Menge an Spritzmittel in den jeweiligen Bodenbereichen verspritzt wurde. Ferner kann so eine homogene Abgabe von Spritzmittel über den Ausleger eingestellt werden. Zudem kann die Durchflussmenge an der Bedieneinheit für einen Anwender der Spritzmaschine ausgegeben werden.

In einer weiteren Ausgestaltung der Erfindung weist die Steuer- und Auswerteeinheit einen Fehlerdetektor auf, der dazu ausgebildet ist, die Stromversorgung des Ventils zu prüfen.

In dieser Ausgestaltung überwacht die Steuer- und Auswerteeinheit die Stromversorgung des Ventils, beispielsweise aus dem Bordnetz. Ein Fehler in der Stromversorgung kann insbesondere dann detektiert werden, wenn ein starker Stromabfall innerhalb der Stromversorgung erfasst wird oder ein Kabelbruch durch Widerstandsmessung erkannt wird.

Detektiert der Fehlerdetektor einen Fehler, so wird das Ventil von der Steuer- und Auswerteeinheit vorzugsweise automatisch geschlossen. Dies verhindert ein unkontrolliertes Auslaufen der Spritzflüssigkeit. Durch den Energiespeicher ist das Schließen auch dann gewährleistet, wenn die Stromversorgung vollständig ausfällt. Auf diese Weise ist das Ventil durch die Steuer- und Auswerteeinheit als Öffnerventil ausgebildet. In anderen Worten, das Ventil ist automatisch immer dann geschlossen, wenn keine Stromversorgung vorhanden ist. Das Ventil ist vorteilhafterweise ohne Rückstellfeder (federlos) ausgebildet. Ihre Funktion wird dann durch den Fehlerdetektor realisiert. Hierdurch wird Strom beim Betreiben des Ventils eingespart.

In einer bevorzugten Ausführungsform der Erfindung öffnet die Steuer- und Auswerteeinheit das Ventil nach einem automatischen Schließen dann wieder, wenn der Fehlerdetektor den Fehler nicht mehr erkennt. Hierdurch wird eine dauerhafte Beeinträchtigung des Betriebs aufgrund von sporadisch falsch erkannten Fehlern verhindert.

In einer weiteren Ausgestaltung, die auch für sich genommen eine erfinderische Weiterbildung von landwirtschaftlich eingesetzten Ventilen und Absperrhähnen ist, weist die Steuer- und Auswerteeinheit eine Flimmersteuerung auf.

In dieser Ausgestaltung wird der Aktuator bei Bedarf mit der Flimmersteuerung gesteuert. Die Flimmersteuerung steuert den Aktuator derart, dass er eine periodische Bewegung mit einer definierten Anzahl an Bewegungshüben und einer definierten Amplitude ausführt. Durch die periodische Bewegung kann der Ventilstößel freigerüttelt werden. Bevorzugt erfolgt dies automatisch, sobald die Steuer- und Auswerteeinheit einen Funktionsfehler erkannt hat, insbesondere, wenn der Ventilstößel verklemmt oder schwergängig ist. Die Steuer- und Auswerteeinheit kann das Verklemmen oder die Schwergängigkeit des Ventilstößels beispielsweise anhand der Stromaufnahme des Aktuators erkennen. Wenn diese ungewöhnlich hoch ist, ist von einem derartigen Defekt auszugehen und die Steuer- und Auswerteeinheit aktiviert die Flimmersteuerung.

Bei Verwendung eines Elektromotors als Aktuator wird damit ein Hin- und Herdrehen des Elektromotors bewirkt. Dieser dreht die Spindel, wodurch der Ventilstößel auf und ab bewegt wird. Die Flimmersteuerung ermöglicht so, dass der Ventilstößel freigerüttelt werden kann. Vorzugsweise ist die Steuer- und Auswerteeinheit dazu ausgebildet, zumindest drei Schaltzyklen, also sechs Bewegungshübe, des Ventilstößels im Rahmen des Flimmerbetriebs zu bewirken.

Die Kapazität des Energiespeichers ist daher vorzugsweise so ausgelegt, dass zumindest die drei Schaltzyklen, also sechs Schaltbewegungen, des Aktuators gesichert sind. So ist gewährleistet, dass auch ein sehr schwergängiger oder stark verklemmter Ventilstößel freigerüttelt werden kann. Zudem ist damit ausreichend elektrische Energie bereitgestellt, dass das Ventil anschließend noch geschlossen werden kann, ohne dass eine externe Stromversorgung benötigt ist.

In einer weiteren Ausgestaltung der Erfindung weist die Steuer- und Auswerteeinheit eine BUS-Schnittstelle auf.

In dieser Ausgestaltung besitzt die Steuer- und Auswerteeinheit einen gesonderten Steueranschluss in Form einer BUS-Schnittstelle. Somit kann die Stromversorgung des Ventils von einer Steuersignalführung getrennt werden. Dies hat den Vorteil, dass bei einem Einsatz einer Vielzahl von Ventilen Versorgungs- und Steuerleitungen eingespart werden können.

In einer besonders einfachen und kostengünstigen Ausführung wird das Ventil über zwei elektrische Leitungen sowohl mit Strom versorgt als auch gesteuert. Zu diesem Zweck können Spannungsimpulse durch die elektrischen Leitungen gesendet werden. Anhand der Flankenrichtungen und der Impulslänge der Spannungsimpulse kann die gewünschte Drehrichtung sowie die Drehdauer von der Steuer- und Auswerteeinheit bestimmt werden. Zudem ist der Einsatz von elektronischen Schaltungen in der Steuer- und Auswerteeinheit denkbar, die über die elektrischen Leitungen nach dem Prinzip einer seriellen Schnittstelle mit einer Adresse adressiert und anschließend entsprechend angesteuert werden können.

In einer besonders bevorzugten Ausführungsform ist die BUS-Schnittstelle eine CAN-BUS-Schnittstelle. Die Verwendung eines CAN-BUSSES bietet den Vorteil, dass die Menge an elektrischen Leitungen zu den Ventilen stark verringert werden kann. Konkret muss kein Kabelbaum von dem Bordnetz der Landmaschine zu den einzelnen Ventilen gezogen werden. Die Ventile können für die Versorgung mit Strom parallel an eine gemeinsame Versorgungsleitung angeschlossen werden. Gleichzeitig können sie über eine gemeinsame Steuerleitung angesteuert werden.

Ein weiter Vorteil ist, dass der CAN-BUS weckfähig ist. Weckfähig bedeutet hier, dass das Ventil so lange in einem Stromsparmodus betrieben werden kann, bis das Ventil tatsächlich in Betrieb genommen wird, um eine Änderung der Ventilstellung herbeizuführen. Hierdurch kann sehr effektiv Strom eingespart werden.

Ferner ist es denkbar, als BUS-Schnittstelle einen ISO-BUS gemäß ISO 11783 einzusetzen. Ein ISO-BUS ist in der Agrartechnik weit verbreitet, so dass die Ventile einfach in vorhandene Systeme integriert werden können.

Insgesamt lässt sich durch die Verwendung der BUS-Schnittstelle der Aufbau eines Systems von Ventilen stark vereinfachen. Hierdurch werden Kosten bei der Herstellung verringert und die Zuverlässigkeit erhöht.

In einer weiteren Ausbildung der Erfindung ist eine Diagnoseeinrichtung vorgesehen, die dazu ausgebildet ist, eine Betriebsbereitschaft der Steuer- und Auswerteeinheit zu prüfen.

In dieser Ausgestaltung überwacht die Diagnoseeinrichtung die Steuer- und Auswerteeinheit. Dies kann zum einen durch eine permanente Überwachung im Betrieb und/oder durch eine initiale Überprüfung bei Inbetriebnahme der Steuer- und Auswerteeinheit erfolgen. Auf diese Weise wird bei Inbetriebnahme der Spritzmaschine die Betriebsbereitschaft jedes Ventils geprüft und ein zuverlässiger und robuster Betrieb gewährleistet.

Alternativ oder zusätzlich überprüft die Diagnoseeinrichtung die Position, Freigängigkeit und Betriebsbereitschaft des Aktuators. In bevorzugten Ausführungsformen überprüft die Diagnoseeinrichtung auch die Spannung der Stromversorgung sowie die Betriebsfähigkeit des Energiespeichers. Vorteilhaft ist dabei, dass die Betriebsbereitschaft des gesamten Ventils regelmäßig überprüft wird und somit ein fehlerfreier Betrieb gewährleistet werden kann.

In einer weiteren Ausgestaltung der Erfindung ist eine Anzeigeeinheit vorgesehen.

In dieser Ausgestaltung wirkt das Ventil mit einer Anzeigeeinheit zusammen. In einer besonders bevorzugten Ausführungsform ist die Anzeigeeinheit als Leuchtdiode ausgebildet. Die Leuchtdiode wird von der Steuer- und Auswerteeinheit angesteuert und kann beispielsweise die Betriebsbereitschaft des Ventils durch Leuchten oder Nichtleuchten anzeigen. Alternativ oder zusätzlich können auch Fehlercodes durch Blinksignale ausgegeben werden.

In einer alternativen oder zusätzlichen Ausführungsform ist es denkbar, dass die Steuer- und Auswerteeinheit eine Rückmeldung an eine externe Anzeigeeinheit - wie die Bedieneinheit - ausgibt. Die Ausgabe kann beispielsweise über die BUS-Schnittstelle erfolgen. Insbesondere kann einem Anwender dadurch angezeigt werden, welches Ventil gerade offen, geschlossen oder defekt ist.

Vorteilhaft ist, dass fehlerhafte Ventile sofort erkannt werden können. Ferner kann bei Anwendung der Fehlercodes vom Anwender sofort erkannt werden, welcher Fehler vorliegt. Somit kann er sicher entsprechende Gegenmaßnahmen treffen.

In einer bevorzugten Ausführungsform weist die Steuer- und Auswerteeinheit einen Datenspeicher auf, der erfasste Daten aus dem Ventil speichert. Beispielsweise können diese die Anzahl gemachter Schaltzyklen, eine aktuelle Temperatur des Aktuators, eine anliegende Spannung am Ventil, ein anliegender Strom am Ventil und/oder eine Fehleranzahl sein. Der Datenspeicher bietet die Möglichkeit einer detaillierten Auswertung im Fehlerfall, so dass Wartungsmaßnahmen einfach und schnell durchgeführt werden können. Zudem ist es denkbar, dass in einem Fehlerfall der Inhalt des Datenspeichers an die Bedieneinheit ausgegeben wird, so dass eine Diagnose direkt beim Anwender erfolgen kann.

Es versteht sich, dass die vorstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Rückansicht einer schematischen Darstellung einer Spritzmaschine,
- Fig. 2: eine perspektivische Darstellung eines bevorzugten Ausführungsbeispiels des neuen Ventils,
- Fig. 3: das Ventil aus Fig. 2 mit geöffnetem Seitenflansch,
- Fig. 4: das Ventil aus Fig. 2 in einer Draufsicht,
- Fig. 5: das Ventil aus Fig. 2 in einer Seitenansicht,
- Fig. 6: das Ventil aus Fig. 2 in einer Schnittansicht,
- Fig. 7: eine vergrößerte Darstellung eines Ausschnitts der Schnittansicht aus Fig. 6,
- Fig. 8: einen Ersatzschaltplan eines bevorzugten Ausführungsbeispiels einer Steuer- und Auswerteeinheit,
- Fig. 9: ein erstes Flussdiagramm eines ersten Teils des erfindungsgemäßen Verfahrens,
- Fig. 10: ein zweites Flussdiagramm eines zweiten Teils des erfindungsgemäßen Verfahrens,
- Fig. 11: ein drittes Flussdiagramm eines dritten Teils des erfindungsgemäßen Verfahrens und
- Fig. 12: ein viertes Flussdiagramm eines vierten Teils des erfindungsgemäßen Verfahrens.

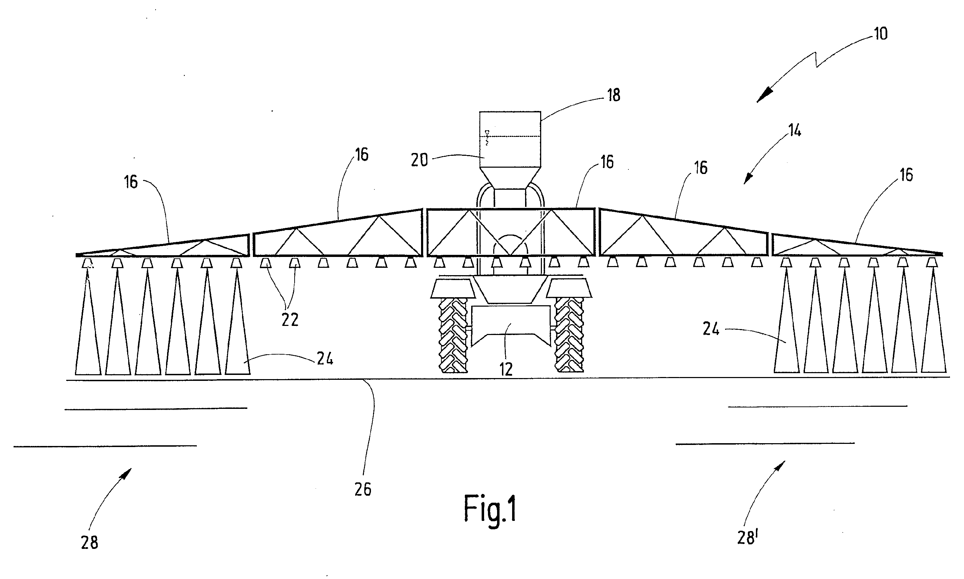

Fig. 1 zeigt eine landwirtschaftliche Spritzmaschine, die in ihrer Gesamtheit mit der Bezugsziffer 10 bezeichnet ist. Sie besteht aus einer Landmaschine 12 in Form eines Traktors, an dem ein Ausleger 14 befestigt ist. Der Ausleger 14 weist fünf Sektionen 16 auf. Diese können zueinander verschwenkt werden, um den Ausleger 14 für einen Transport einzuklappen. An dem Ausleger ist ein Tank 18 angeordnet, der eine Spritzflüssigkeit 20 enthält. Entlang des gesamten Auslegers 14 sind Spritzdüsen 22 verteilt. Die Spritzdüsen 22 sind über Schlauchleitungen mit dem Tank 18 verbunden, so dass die Spritzflüssigkeit 20 zu den Spritzdüsen 22 gefördert werden kann. Die Schlauchleitungen sind aus Gründen der Übersichtlichkeit nicht dargestellt. Die Spritzdüsen 22 dienen dazu, die Spritzflüssigkeit 20 als Spritzstrahlen 24 auf den Boden 26 abzugeben. Durch eine Vielzahl der erfindungsgemäßen Ventile können die Spritzdüsen 22 individuell angesteuert werden.

Wie in Fig. 1 beispielhaft gezeigt ist, sind nur die jeweils äußeren sechs Spritzdüsen 22 im Betrieb. Somit werden lediglich Bodenbereiche 28 und 28' mit der Spritzflüssigkeit 20 bespritzt. Durch die Möglichkeit, jede Spritzdüse 22 individuell ansteuern zu können, kann der Boden 26 besonders exakt mit der notwendigen Menge an Spritzflüssigkeit 20 bespritzt werden. In besonders bevorzugten Ausführungsbeispielen ist die Landmaschine 12 mit einem GPS-Empfänger und einem Bordcomputer ausgerüstet. Der GPS-Empfänger und der Bordcomputer verfolgen die Bewegungen der Spritzmaschine 10 und speichern die bereits bespritzten Bodenbereiche ab. Schwenkt der Ausleger 14 über einen bereits bespritzten Bodenbereich 28, 28', dann schaltet der Bordcomputer die entsprechenden Spritzdüsen 22 automatisch ab. Dadurch wird ein mehrfaches Bespritzen die Bodenbereiche 28, 28' verhindert.

In den Fig. 1 bis 7 ist ein Ausführungsbeispiel eines erfindungsgemäßen Ventils 30 in verschiedenen Ansichten dargestellt. Das Ventil 30 ist im Betrieb Teil eines nicht dargestellten Düsenmoduls. Das Düsenmodul weist einen Spritzdüsenhalter auf. Der Spritzdüsenhalter besitzt Anschlüsse für eine Spritzmittelleitung, die Spritzdüse 22 und das Ventil 30. Das Spritzmittel 20 wird aus der Spritzmittelleitung durch den Spritzdüsenhalter zum Ventil 30 geführt. Das Ventil 30 steuert dann die Durchflussmenge zu der Spritzdüse 22. An der Spritzdüse 22 wird das Spritzmittel 20 abgegeben.

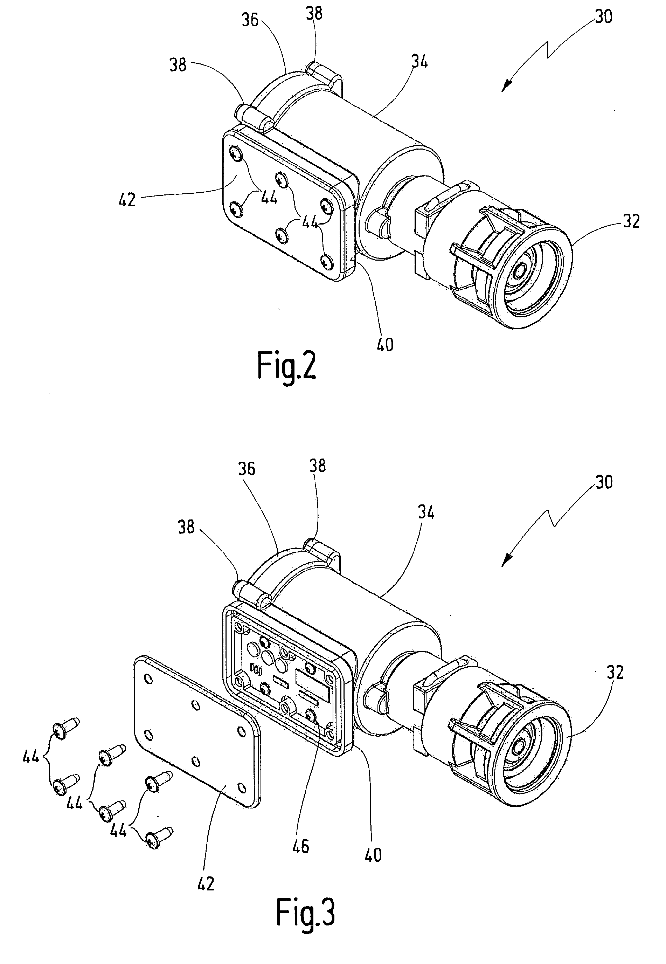

Zum Anschließen des Ventils 30 an den Spritzdüsenhalter ist eine Kupplung 32 vorgesehen. Die Kupplung 32 ist mit einem Ventilgehäuse 34 verbunden, welches einen Deckel 36 aufweist. Der Deckel 36 ist mit vier Schrauben 38 befestigt. Das Ventilgehäuse 34 kapselt einen darin angeordneten Motor und schützt diesen vor Umwelteinflüssen. Zudem weist das Ventilgehäuse 34 einen Seitenflansch 40 auf, der über einen Deckel 42 geöffnet werden kann. Der Deckel 42 ist mit sechs Schrauben 44 befestigt. In Fig. 3 ist der Seitenflansch 40 in einer Explosionsdarstellung gezeigt. Innerhalb des Seitenflansches 40 ist eine Steuer- und Auswerteeinheit 46 angeordnet. Die Steuer- und Auswerteeinheit 46 ist als Platine ausgeführt, auf der eine Vielzahl elektronischer Bauteile angeordnet ist. In bevorzugten Ausführungsbeispielen sind dem Deckel 36 und dem Deckel 42 jeweils Dichtungen zugeordnet, die das Ventilgehäuse 34 weitgehend wasser- und schmutzdicht abdichten.

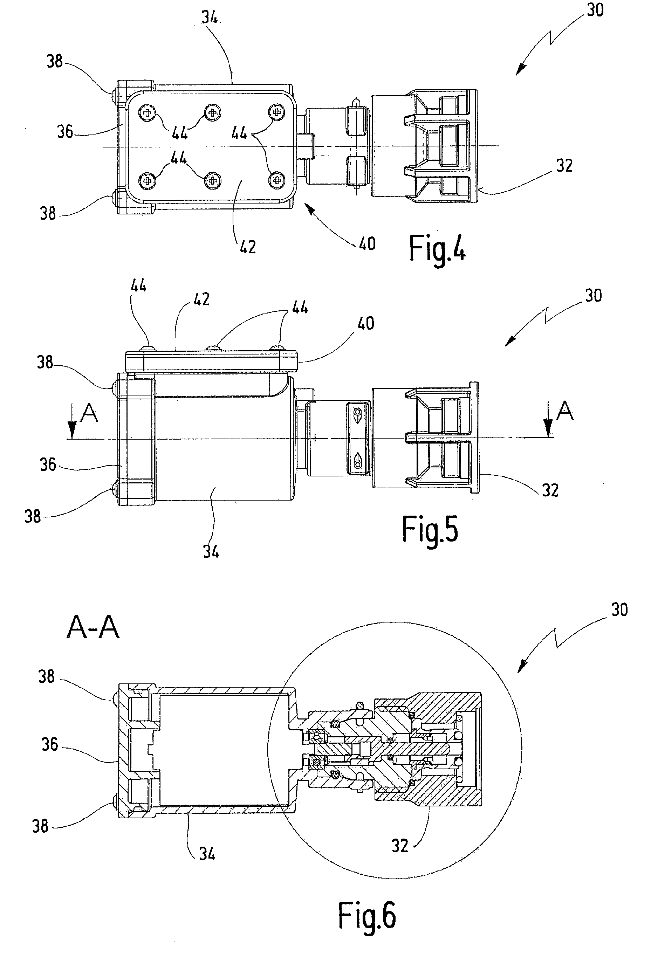

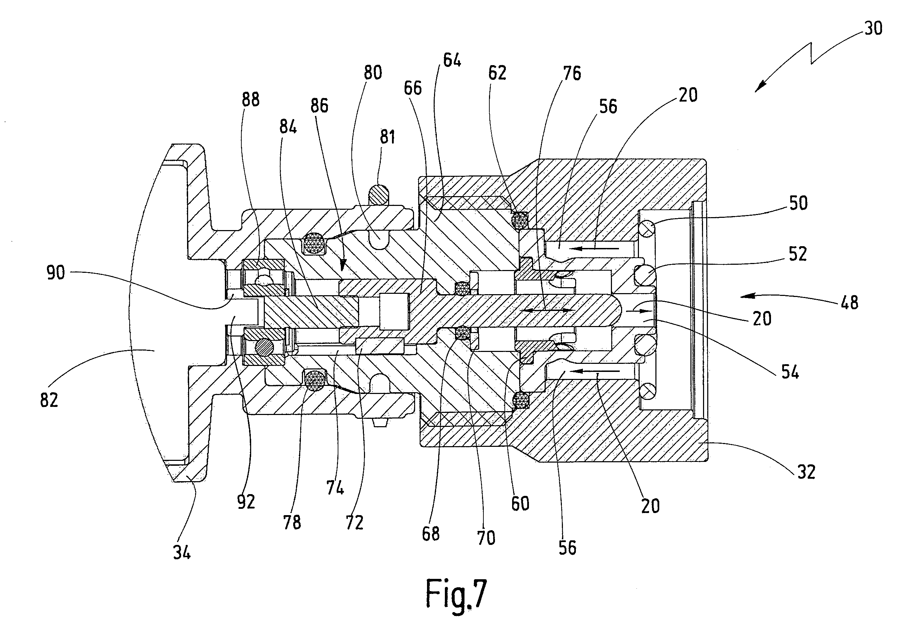

Fig. 7 zeigt eine Vergrößerung der Schnittdarstellung A-A aus Fig. 6. Die Kupplung 32 weist eine Öffnung 48 auf, die bei Einsatz des Ventils 30 mit dem Spritzdüsenhalter verbunden wird. Um eine flüssigkeitsdichte Verbindung herstellen zu können, sind zwei O-Ringe 50 und 52 vorgesehen, die konzentrisch zueinander angeordnet sind. Der O-Ring 52 wird von einer Zwischenbüchse 54 gehalten, welcher einen Einlassbereich 56 von einem Auslassbereich 58 trennt. Der Auslassbereich 58 ist hier zylinderförmig ausgebildet. Er wird von dem Einlassbereich 56 radial umgeben. Der O-Ring 50 dichtet das Ventil 30 nach Außen hin ab. In der Zwischenbüchse 54 ist eine Distanzhülse 60 angeordnet. Die Distanzhülse 60 ist seitlich teilweise ausgespart, so dass innerhalb des Ventils 30 Spritzflüssigkeit 20 aus dem Einlassbereich 56 in den Auslassbereich 58 gelangen kann.

Die Kupplung 32 ist über einen O-Ring 62 flüssigkeitsdicht mit einem Führungsteil 64 verbunden. Das Führungsteil 64 führt einen Ventilstößel 66. Der Ventilstößel 66 ist in seiner Längserstreckung konzentrisch zu dem Einlassbereich 56 und dem Auslassbereich 58 angeordnet. Um den Ventilstößel 66 ist ein weiterer O-Ring 68 angeordnet, der einen Übergang der Spritzflüssigkeit 20 in das Führungsteil 64 entlang des Ventilstößels 66 verhindert. Dieser O-Ring 68 stützt sich zwischen dem Führungsteil 64 und einer Stützscheibe 70 ab. Am Ventilstößel 66 ist ein Führungsblock 72 angeordnet, der formschlüssig mit dem Ventilstößel 66 verbunden ist. Der Führungsblock 72 wird in einer Führungsnut 74 des Führungsteils 64 geführt. Der Führungsblock 72 und die Führungsnut 74 definieren so eine Bewegungsrichtung 76 des Ventilstößels 66 entlang seiner Längserstreckung. Gleichzeitig verhindern sie ein Verdrehen des Ventilstößels 66 innerhalb des Ventils 30.

In dem Führungsteil 64 sind Sicherungsaussparungen 80 vorgesehen, die dazu ausgebildet sind, einen Sicherungsbügel 81 aufzunehmen. Er wird durch Öffnungen im Ventilgehäuse 34 gesteckt und greift dann in die Sicherungsaussparungen 80. So wird das Führungsteil 64 formschlüssig mit dem Ventilgehäuse 34 verbunden. Durch diese Art des Verbindens ist ein sicherer Halt bei einer sehr schnellen Zerlegbarkeit des Ventils realisiert.

Das Führungsteil 64 ist über einen weiteren O-Ring 78 flüssigkeitsdicht mit dem Ventilgehäuse 34 verbunden. Innerhalb des Ventilgehäuses 34 ist ein Motor 82 angeordnet. Zwischen dem Motor 82 und dem Ventilstößel 66 befindet sich eine Spindel 84. Die Spindel 84 weist auf der Seite des Ventilstößels 66 ein Gewinde auf. Das Gewinde der Spindel 84 kämmt in einem Bereich 86 mit einem entsprechenden Gegengewinde des Ventilstößels 66. Durch Verdrehen der Spindel 84 kann der Ventilstößel 66 entlang der Bewegungsrichtungen 76, also in Richtung seiner Längserstreckung, bewegt werden. Die Spindel 84 ist zu diesem Zweck ortsfest in der Bewegungsrichtung 76 angeordnet und wird von einem Kugellager 88 drehbar gelagert. Zum Verdrehen der Spindel 84 weist sie auf der Seite des Motors 82 eine Nut 90 auf. In diese Nut 90 greift eine Antriebswelle 92 des Motors 82 ein. Die Antriebswelle 92 ist hierzu seitlich abgeflacht, so dass ein Verdrehen der Spindel 84 durch Formschluss erfolgen kann.

Der Motor 82 kann sehr exakt in zwei Drehrichtungen betrieben werden. Wird der Motor 82 betrieben, dann verdreht er die Spindel 84 mit der Antriebswelle 92. Aufgrund der Gewinde der Spindel 84 und des Ventilstößels 66 wird der Ventilstößel 66 entlang der Bewegungsrichtung 76 verlagert. Der Ventilstößel 66 ist hier in einer Ventilstellung dargestellt, die das Ventil 30 vollständig schließt. Durch Betätigen des Motors 82 kann der Ventilstößel 66 aus der dargestellten Ventilstellung nur in Richtung des Motors 82 bewegt werden. Damit wird das Ventil 30 geöffnet und die Spritzflüssigkeit 20 fließt aus dem Einlassbereich 56 in den Auslassbereich 58. Aufgrund der geometrischen Ausgestaltung der Spitze des Ventilstößels 66 im Auslassbereich 58 ist das Ventil nicht auf ein diskretes Öffnen oder Schließen beschränkt. In Abhängigkeit der Ventilstellung des Ventilstößels wird die gewünschte Durchflussmenge an Spritzflüssigkeit 20 definiert.

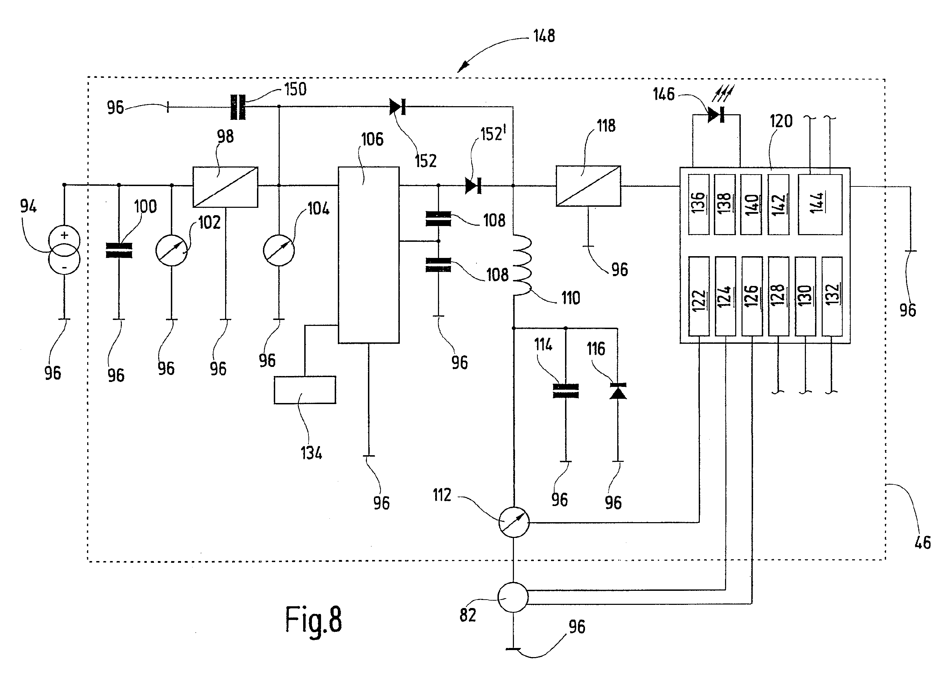

In Fig. 8 ist ein Ersatzschaltplan des bevorzugten Ausführungsbeispiels der Steuer- und Auswerteeinheit 46 dargestellt. Mit der Bezugsziffer 94 ist eine Konstantstromquelle bezeichnet, die aus dem Bordnetz der Spritzmaschine gespeist ist. Sie stellt eine Stromversorgung für das Ventil 30 dar. Zudem begrenzt sie einen Versorgungsstrom für die Steuer- und Auswerteeinheit 46 auf einen festgelegten Maximalwert. In besonders bevorzugten Ausführungsbeispielen liegt dieser Maximalwert bei 100 mA. Der positive Pol der Konstantstromquelle 94 ist mit der Steuer- und Auswerteeinheit 46 verbunden, um diese und den Motor 82 mit elektrischem Strom zu versorgen.

Die Steuer- und Auswerteeinheit 46 weist einen DC/DC-Wandler 98 auf, der die variable Eingangsspannung aus dem Bordnetz auf eine definierte konstante Gleichspannung wandelt, die für den Betrieb der Komponenten der Steuer- und Auswerteeinheit 46 geeignet ist. In bevorzugten Ausführungsbeispielen liefert das Bordnetz eine elektrische Spannung im Bereich von 12 oder 24 Volt und wird in dem DC/DC-Wandler 98 auf 5 Volt gewandelt. Der DC/DC-Wandler 98 ermöglicht die Anpassung des Ventils 30 an einen weiten Betriebsspannungsbereich, so dass das Ventil 30 mit verschiedenen elektrischen Spannungen betrieben werden kann. Weiter gewährleistet er eine optimale Anpassung der Spannung an die Motorkennwerte. Dies führt zu einem hohen Wirkungsgrad und damit zu einer Energieersparnis.

Parallel zu dem DC/DC-Wandler 98 sind ein Kondensator 100 sowie ein Spannungsmesser 102 geschaltet. Der Kondensator 100 dient dazu, Spannungsschwankungen der Konstantstromquelle 94 auszugleichen. Der Spannungsmesser 102 misst eine Spannung U1, die an der Konstantstromquelle 94 anliegt. Weiter wird eine Ausgangsspannung U2 des DC/DC-Wandlers 98 von einem weiteren Spannungsmesser 104 gemessen.

Eine Energiesteuerung 106 wird von der Ausgangsleistung des DC/DC-Wandlers 98 betrieben. Die Energiesteuerung 106 steuert das Laden der Energiespeicher 108. Sie ist für eine benötigte Betriebsspannung mit Masse 96 verbunden. Die Energiespeicher 108 sind in dem dargestellten Ausführungsbeispiel als Kondensatoren 108, insbesondere als elektrochemische Doppelschichtkondensatoren ("Superkondensatoren") ausgebildet. Für das Laden der Kondensatoren 108 bestimmt die Energiesteuerung 106 zunächst deren Ladezustand. Sie lädt die Kondensatoren 108 dann, wenn ihr Ladezustand unter ein vorgegebenes Mindestniveau sinkt. Sind die Kondensatoren 108 voll geladen, wird der Ladevorgang gestoppt und damit ein Überladen verhindert.

Die gespeicherte elektrische Energie wird bei Bedarf aus den Kondensatoren 108 über eine Spule 110 und einen Strommesser 112 zu dem Motor 82 geleitet. Parallel zum Motor 82 und Strommesser 112 ist ein Löschkreis vorgesehen. Er besteht aus einem Kondensator 114 und einer Diode 116.

Mit der elektrischen Energie aus den Kondensatoren 108 wird zudem ein weiterer DC/DC-Wandler 118 betrieben. Der DC/DC-Wandler 118 regelt die anliegende Spannung auf einen Wert, mit dem ein Mikrocontroller 120 betrieben werden kann. In bevorzugten Ausführungsbeispielen wird die Spannung auf 3 V gewandelt. Der Mikrocontroller 120 ist für eine benötigte Betriebsspannung mit Masse 96 verbunden.

Der Mikrocontroller 120 dient als Ein- und Ausgabevorrichtung der Steuer- und Auswerteeinheit 46. Weiter dient er als Steuer- und Regelvorrichtung für den Motor 82. Um den Motor 82 zu überwachen, ist eine Schnittstelle 122 vorgesehen. Über die Schnittstelle 122 wird ein von dem Strommesser 112 bestimmter Motorstrom I erfasst. Die Steuer- und Auswerteeinheit 46 bestimmt die Ventilstellung anhand des elektrischen Motorstroms I, der von dem Motor 82 aufgenommen wird. In Abhängigkeit des Motorstroms I und von bekannten Motorkennwerten wird ein Drehwinkel des Motors 82 ermittelt. Der Drehwinkel wird anschließend zusammen mit der Gewindesteigung des Gewindes für die Bewegung des Ventilstößels 66 in einen relativen axialen Weg des Ventilstößels 66 umgerechnet. Dieser axiale Weg beschreibt dann die Änderung von der ursprünglichen Position des Ventilstößels 66 in die neue Position des Ventilstößels 66. Abschließend kann die absolute Ventilstellung anhand des relativen axialen Weges in Verbindung mit der Anfangsstellung bestimmt werden.

Weiter wird anhand des Motorstroms I überwacht, ob der Motor 82 über das zu erwartende Maß hinaus belastet wird. In diesem Fall zieht die Steuer- und Auswerteeinheit 46 Rückschlüsse darauf, ob eine Endlage des Ventilstößels 66 erreicht ist oder ob ein Verklemmen bzw. eine Schwergängigkeit des Ventilstößels 66 vorliegt.

Weiter wird über eine Schnittstelle 124 eine Temperatur des Motors 82 gemessen. Anhand der Temperatur überwacht die Steuer- und Auswerteeinheit 46 den Zustand des Motors 82, um zusätzlich die Überbelastung des Motors 82 zu verhindern.

Über eine Schnittstelle 126 werden Steuersignale von der Steuer- und Auswerteeinheit 46 an den Motor 82 gesendet. Die Steuersignale erfolgen in Form einer Spannung, deren Polarität die Drehrichtung definiert. Alternativ können die Steuersignale auch in Form einer Pulsweitenmodulation erfolgen.

Des Weiteren erfasst der Mikrocontroller 120 die Spannung U1 des Strommessers 112 über eine Schnittstelle 128. Zudem wird die von dem Spannungsmesser 104 erfasste Spannung U2 über eine Schnittstelle 130 an den Mikrocontroller 120 weitergeleitet. In Abhängigkeit der Spannungen U1 und U2 kann der Mikrocontroller 120 Schwankungen in der Spannungsversorgung feststellen und Fehler in der Stromversorgung der Konstantstromquelle 94 erkennen.

Über eine weitere Schnittstelle 132 steuert der Mikrocontroller 120 die Energiesteuerung 106 an einem Signaleingang 134. Zudem werden in bevorzugten Ausführungsbeispielen von dem Mikrocontroller 120 die vorhandenen Energiereserven in den Energiespeichern 108 erfasst, so dass eine Betriebsbereitschaft des Ventils 30 durch den Mikrocontroller 120 erfasst und gesichert ist.

Der Mikrocontroller 120 realisiert ferner eine Flimmersteuerung 136. Die Flimmersteuerung 136 erzeugt periodische Wechselbewegungen des Motors 82, so dass dieser den Ventilstößel 66 frei rüttelt. Konkret wird eine schnelle Folge von Hin- und Herbewegungen erzeugt, so dass Verklemmungen oder Reibwiderstände überwunden werden können. Die Flimmersteuerung 136 wird dann von dem Mikrocontroller 120 eingesetzt, wenn eine Schwergängigkeit anhand des erfassten Motorstroms I erkannt wird.

Zudem weist der Mikrocontroller 120 eine Diagnoseeinrichtung 138 auf. Die Diagnoseeinrichtung 138 prüft bei Start des Betriebs des Ventils 30, ob die elektrischen Komponenten des Ventils 30 betriebsbereit sind. In bevorzugten Ausführungsbeispielen ist vorgesehen, dass insbesondere die Betriebsbereitschaft des Motors 82, der Konstantstromquelle 94, der Energiesteuerung 106 sowie des Mikrocontrollers 120 vorliegt.

Weiter weist der Mikrocontroller 120 einen Datenspeicher 140 auf, in dem Daten über den Betrieb des Ventils 46 gespeichert werden. Diese Daten werden für Diagnose- und Wartungszwecke gespeichert. Sie beinhalten Informationen über die getätigten Schaltzyklen des Ventils 30, die Temperatur des Motors 82, die anliegende Spannung und den anliegenden Strom an dem Ventil 30 sowie eine vorhandene Fehleranzahl.

Zudem besitzt der Mikrocontroller 120 einen Fehlerdetektor 142. Der Fehlerdetektor 142 überwacht die Stromversorgung des Ventils 30. In einem Fehlerfall, beispielsweise bei einem starken Stromabfall infolge Kabelbruch, steuert der Fehlerdetektor 142 den Motor 82 über die Schnittstelle 126 an. Der Motor 82 wird dabei derart angesteuert, dass er den Ventilstößel 66 in eine Geschlossenstellung bringt. Auf diese Weise ist das Ventil 30 steuerungstechnisch als Öffnerventil ausgebildet. In anderen Worten, das Ventil 30 ist so ausgebildet, dass es im Fehlerfall oder bei fehlender Betätigung automatisch geschlossen wird. Durch den Fehlerdetektor 142 wird eine Schließfeder gegenüber herkömmlichen Ventilen ersetzt. Der Wegfall der Schließfeder führt dazu, dass wesentlich weniger elektrische Energie für das Öffnen des Ventils 30 gegenüber herkömmlichen Ventilen benötigt wird.

Die Energiespeicher 108 sind in ihrer Kapazität darauf ausgelegt, dass die Flimmersteuerung 136 und der Fehlerdetektor 142 jederzeit eingesetzt werden können. Sie stellen soviel elektrische Energie bereit, dass mindestens drei Schaltzyklen durchgeführt werden können. Bei einem plötzlichen Stromabfall ist so ein Freirütteln des Ventilstößels 66 und ein sicheres Schließen des Ventils 30 gewährleistet. Dadurch wird ein zuverlässiger und robuster Betrieb gesichert.

Weiter weist der Mikrocontroller 120 eine BUS-Schnittstelle 144 auf, die als Ein- und Ausgabeeinheit für die Steuer- und Auswerteeinheit 46 dient. In bevorzugten Ausführungsbeispielen kommuniziert eine externe Bedieneinheit bidirektional über die BUS-Schnittstelle 144 mit dem Ventil 30. Von der Bedieneinheit aus lassen sich über die BUS-Schnittstelle 144 auf sehr einfache Weise verschiedene Betriebsmodi in dem Mikrocontroller 120 einstellen. Es wird beispielsweise einem Anwender ermöglicht, dass er manuell zwischen einem Normalbetriebsmodus oder dem Flimmerbetrieb wählen kann. Zudem erfolgt eine Rückmeldung von der Steuer- und Auswerteeinheit 46 an die Bedieneinheit für eine Ausgabe an den Anwender. Die Rückmeldung enthält Informationen über die Betriebsbereitschaft, den Betriebszustand und Fehler des Ventils. Sie können beispielsweise auch die Daten aus dem Datenspeicher beinhalten. Ferner ist die Übermittlung von Informationen über die Ventilstellung oder die Durchflussmenge an Spritzmittel 20 in dem Ventil 30 denkbar.

Die BUS-Schnittstelle 144 ist als CAN-BUS-Schnittstelle ausgebildet. Sie hat den Vorteil, dass für alle Ventile 30 der Spritzmaschine 10 nur wenige Steuerleitungen verwendet werden müssen. Zudem ist der CAN-BUS weckfähig. Weckfähig bedeutet hier, dass das Ventil 30 so lange in einem Stromsparmodus betrieben werden kann, bis das Ventil 30 tatsächlich in Betrieb genommen wird, um eine Änderung der Ventilstellung herbeizuführen. In alternativen Ausführungsbeispielen kann auch ein ISO-BUS oder eine serielle Schnittstelle als BUS-Schnittstelle 144 eingesetzt werden.

Der Einsatz des Mikrocontrollers 120 ermöglicht durch die BUS-Schnittstelle 144 eine sichere und robuste Steuerung des Ventils 30 bei gleichzeitiger Einsparung von elektrischen Leitungen.

Zudem weist die Steuer- und Auswerteeinheit 46 eine Anzeigeeinheit in Form einer Leuchtdiode 146 auf. Die Leuchtdiode 146 ist von außen sichtbar am Ventil 30 angebracht. Sie dient dazu, die Betriebsbereitschaft des Ventils 30 anzuzeigen. Zusätzlich wird ein Blinkcode ausgegeben, wenn ein Fehler durch den Fehlerdetektor 136 oder die Diagnoseeinrichtung 138 erkannt wird. So kann ein Anwender an dem Ausleger 14 sofort erkennen, welches Ventil 30 defekt ist. Gleichzeitig kann er sofort erkennen, welcher Defekt konkret vorliegt.

Des Weiteren ist in diesem bevorzugten Ausführungsbeispiel ein Bypass 148 innerhalb der Steuer- und Auswerteeinheit 46 vorgesehen. Der Bypass 148 umgeht die Energiespeicher 108. Er kann sowohl den Mikrocontroller 120 sowie den Motor 82 direkt mit elektrischer Energie aus dem DC/DC-Wandler 98 versorgen. Der Bypass 148 weist einen Kondensator 150 auf, der eine DC-Entkopplung vom Bordnetz bildet. Innerhalb des Bypasses 148 sind zwei schaltbare Dioden 152 und 152' vorgesehen, die von dem Mikrocontroller 120 gesteuert werden können. Sobald der Mikrocontroller 120 einen Fehler der Energiespeicher 108 erkennt, werden die Dioden 152 und 152' entsprechend geschaltet. Die Diode 152 gibt dann die Umgehungsleitung um die Energiespeicher 108 herum frei, um den Motor 82 und den Mikrocontrollers mit Strom zu versorgen. Die Diode 152' sperrt dagegen die Energiezufuhr von der Umgehungsleitung zu den Kondensatoren 108, damit dem Motor 82 die gesamte elektrische Energie zur Verfügung steht. Zudem schützt die Diode 152' die Energiesteuerung 106 vor der Energiezufuhr aus der Umgehungsleitung. In bevorzugten Ausführungsformen ist die Energiesteuerung 106 als Lade-IC ausgebildet. Dieser wird durch die Diode 152' geschützt, da ansonsten bei geöffnetem Bypass 148 eine Spannung mit falscher Polung anliegen würde. Diese könnte einen Defekt innerhalb des Lade-ICs hervorrufen. Die Diode 152' kann auch als "normale" Diode ausgebildet sein, die in eine Richtung den Stromfluss zulässt und in die andere Richtung sperrt.

Alternativ ist es denkbar, dass die Diode 152 eine Pin-Diode ist. Die Pin-Diode kann mittels eines relativ starken Energieimpulses durchgeschaltet werden, so dass keine zusätzliche Steuerleitung benötigt wird.

In einer weiteren alternativen Ausführungsform ist es denkbar, dass die Energiesteuerung 106 die schaltbaren Dioden 150 und/oder 152' schaltet. Dies hat den Vorteil, dass die Energiesteuerung 106 nicht von der Energieversorgung aus dem Bypass 148 gespeist wird. So wird ein besonders zuverlässiges Schalten des Bypasses 148 gewährleistet, wenn ein Defekt der Energiespeicher 108 vorliegt.

Der Bypass 148 wird auch dann eingesetzt, wenn erkannt wird, dass die Energiespeicher 108 für einen geforderten Betrieb nicht ausreichend geladen sind. Dann schaltet der Mikrocontroller 120 die schaltbaren Dioden 152 und 152' ebenfalls in der oben beschriebenen Weise.

Der Bypass 148 stellt so einen direkten Zugriff auf das Ventil 30 sicher, auch wenn ein Fehler an den Energiespeichern 108 vorliegt. Somit kann ein defektes Ventil 30 zunächst weiter verwendet werden und der Betrieb der Spritzmaschine 10 muss nicht aufgrund eines defekten Ventils 30 unterbrochen werden.

Weiter ist vorgesehen, dass die schaltbaren Dioden 152 und 152' dann zurückgeschaltet werden, wenn die Energieversorgung durch die Energiespeicher 108 wieder gesichert ist. Das heißt, der Bypass 148 wird dann wieder geschlossen, wenn die Energiespeicher 108 wieder geladen und betriebsbereit sind.

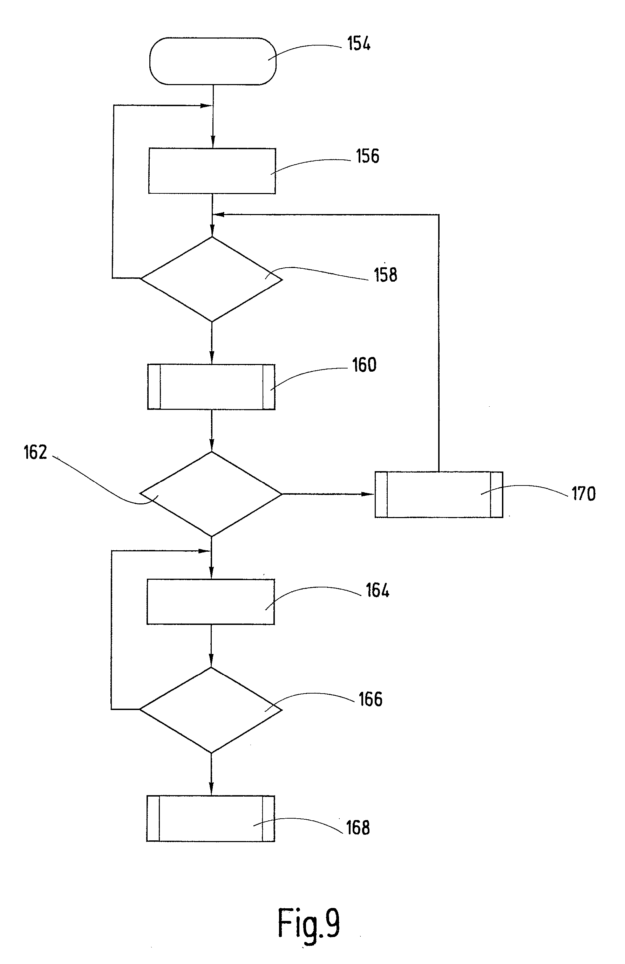

In den Fig. 9 bis 12 sind mehrere Flussdiagramme dargestellt, die im Gesamten ein erstes Ausführungsbeispiel des erfindungsgemäßen Verfahrens beschreiben.

Fig. 9 beschreibt eine Startprozedur bei Inbetriebnahme des Ventils 30. In einem Schritt 154 wird die Betriebsspannung an das Ventil 30 angelegt. Es folgt ein Schritt 156, in dem die Energiespeicher 108 vorgeladen werden, um einen stabilen Betrieb der Steuer- und Auswerteeinheit 46 zu gewährleisten. Die Vorladung erfolgt so lange, bis in einem Schritt 158 erkannt wird, dass die Eingangsspannung an der Steuer- und Auswerteeinheit 46 größer als eine Mindestbetriebsspannung ist. In einem besonders bevorzugten Ausführungsbeispiel wird die Steuer- und Auswerteeinheit 46 mit einer Bordnetzspannung von 12 Volt betrieben. Die Vorladung in Schritt 156 erfolgt in diesem Fall so lange, bis in Schritt 158 eine Spannung detektiert wird, die größer als 5 Volt ist.

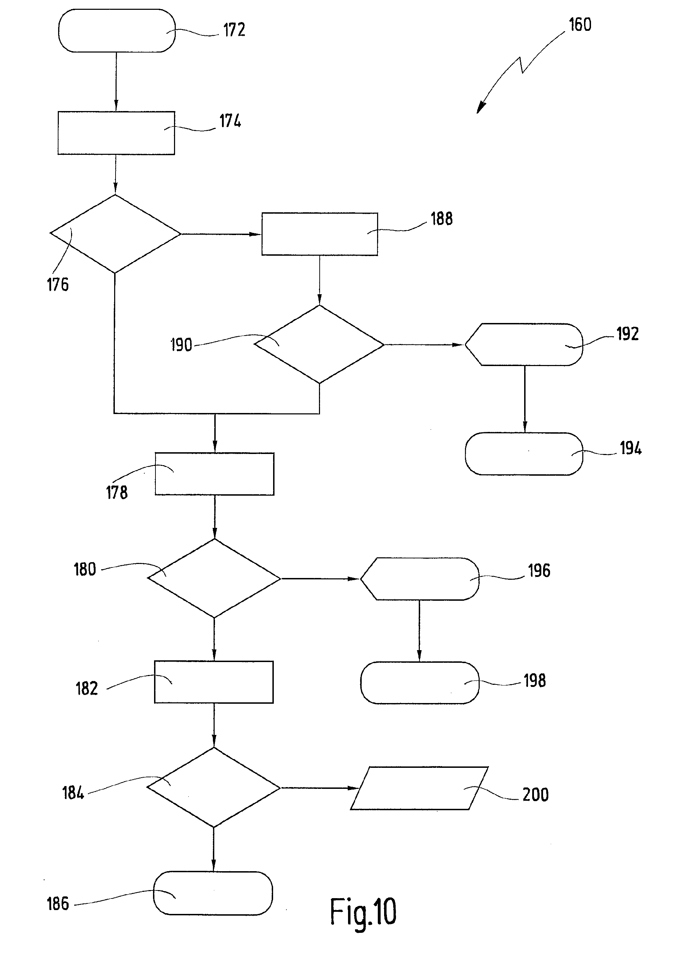

Ist dies erfolgt, wird eine Initialisierung in Schritt 160 durchgeführt. Die Initialisierung wird im Einzelnen anhand der Fig. 10 beschrieben. Nach erfolgter Initialisierung wird eine Ausgabe der Initialisierung in einem Schritt 162 auf ein Fehlersignal hin geprüft. Liegt kein Fehlersignal vor, dann werden die Energiespeicher 108 in einem Schritt 164 vollständig geladen.

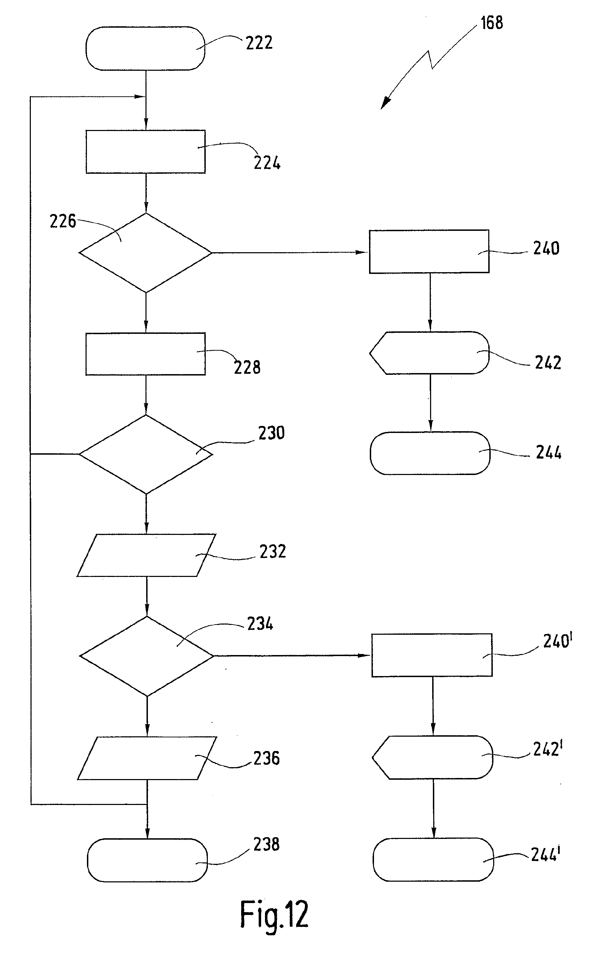

Der Ladezustand der Energiespeicher 108 wird dann in einem weiteren Schritt 166 überprüft. Ist die Vollladung noch nicht erreicht, dann wird der Schritt 164 solange wiederholt, bis sie erreicht ist. Anschließend geht das Ventil 30 in einen Betriebsmodus im Schritt 168. Der Betriebsmodus wird im Einzelnen anhand der Fig. 12 beschrieben.

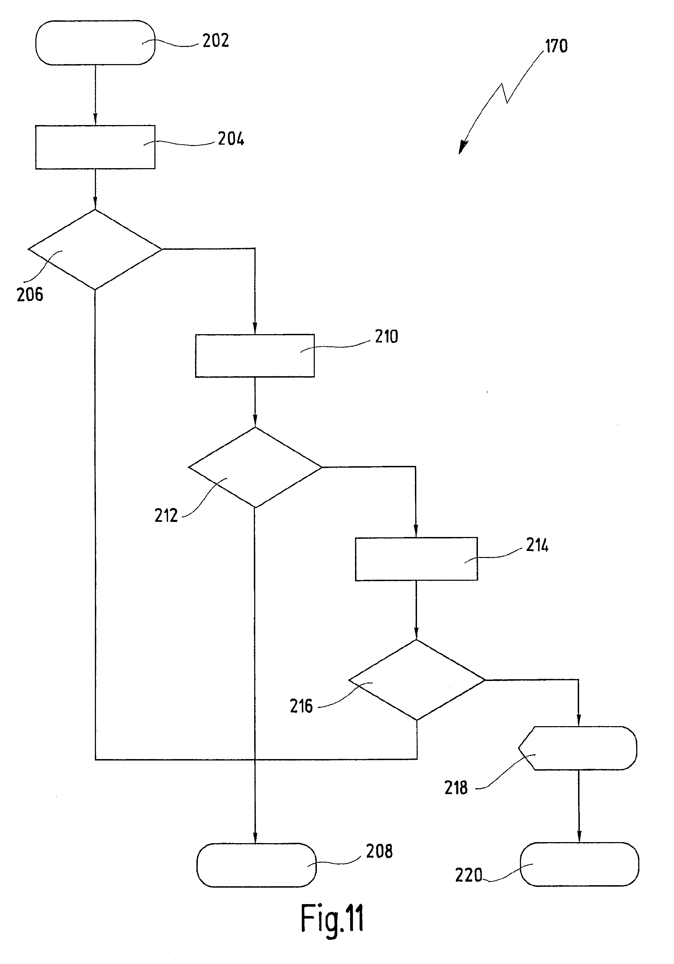

Wird im Schritt 162 ein Fehlersignal erkannt, so wird eine Fehlerbehandlung im Schritt 170 ausgeführt. Die Fehlerbehandlung ist im Einzelnen anhand der Fig. 11 beschrieben. Nach Ausführung der Fehlerbehandlung wird zurück zum Schritt 158 verfahren, so dass abermals die Vollladung geprüft und das System neu initialisiert wird.

Fig. 10 zeigt die Initialisierung in Schritt 160 im Detail. Die Initialisierung startet in Schritt 172, welchem eine Abprüfung des CAN-BUSSES in Schritt 174 folgt. In einem Schritt 176 wird eine Ausgabe des Schritts 174 ausgewertet. Ist ein CAN-BUS vorhanden, wird er als Ein- und Ausgabeeinheit in einem Schritt 178 initialisiert. Anschließend wird in Schritt 180 geprüft, ob der CAN-BUS fehlerfrei funktioniert.

Ist die Ausgabe des Schritts 180 positiv, dann erfolgt eine Endlagenkontrolle des Ventilstößels 66 in Schritt 182. Somit ist gewährleistet, dass der Ventilstößel 66 im Betrieb aus einer definierten Anfangsstellung heraus bewegt wird. Somit kann anhand der Bewegungsveränderungen, die über die Stromaufnahme des Motors 82 erfasst werden, zu jedem Zeitpunkt eine absolute Position des Ventilstößels 66 und damit die Ventilstellung bestimmt werden. Weiter wird dadurch gesichert, dass sämtliche Ventile 30 des Auslegers 14 beim Einschalten geschlossen sind. Wird in einem Schritt 184 erkannt, dass das Ventil 30 geschlossen ist, dann wird die Initialisierung in einem Schritt 186 beendet und das Verfahren aus Fig. 9 weitergeführt.

Wird in Schritt 176 kein CAN-BUS erkannt, dann wird eine Abprüfung alternativer BUS-Systeme, wie beispielsweise ein ISO-BUS oder 3Wire, in einem Schritt 188 durchgeführt. Schritt 190 wertet eine Ausgabe der Abprüfung aus Schritt 188 aus. Wurde ein alternatives BUS-System erkannt, so wird dieses in Schritt 178 initialisiert und entsprechend wie der CAN-BUS weiterbehandelt. Wird in Schritt 190 kein weiteres BUS-System erkannt, so wird in einem Schritt 192 ein Fehlersignal ausgegeben und die Initialisierung in Schritt 194 beendet. Das Verfahren wird dann in Fig. 9 fortgeführt, wobei aufgrund des Fehlersignals die Fehlerbehandlung in Schritt 170 ausgeführt wird.

Wird in Schritt 180 der Fig. 10 ein Fehler bei der Initialisierung aus dem Schritt 178 erkannt, so erfolgt auch hier die Ausgabe eines Fehlersignals in einem Schritt 196 und die Initialisierung wird in Schritt 198 beendet. Das Verfahren wird auch hier anschließend in Fig. 9 fortgeführt, wobei aufgrund des Fehlersignals die Fehlerbehandlung in Schritt 170 ausgeführt wird.

Ist aufgrund der Endlagenkontrolle in Schritt 182 erkannt worden, dass das Ventil 30 nicht geschlossen ist, so löst Schritt 184 ein Fehlerprotokoll aus. Das Fehlerprotokoll erfolgt in Schritt 200 und speichert sämtliche Daten aus dem Mikrocontroller 120. Zudem erfolgt eine Ausgabe des Fehlers als Blinkcode über die Anzeigeeinheit 146.

Fig. 11 zeigt die Fehlerbehandlung aus Schritt 170 der Fig. 9 im Detail. Die Fehlerbehandlung wird in einem Block 202 gestartet. Zunächst werden Fehler aus dem Datenspeicher 140 in einem Schritt 204 ausgelesen. Die ausgelesenen Daten werden in einem Schritt 206 überprüft. Liegen keinerlei Daten vor, so wird die Fehlerbehandlung in einem Schritt 208 beendet. Das Verfahren wird dann in Fig. 9 fortgeführt, wobei es dann mangels einer Fehlermeldung in Schritt 164 fortgeführt wird.

Werden in Schritt 206 Fehlerdaten erkannt, so wird in einem Schritt 210 die Flimmersteuerung 136 betätigt und der Ventilstößel 66 freigerüttelt. Anschließend wird in einem Schritt 212 geprüft, ob das Freirütteln erfolgreich war. Ist dies der Fall, so wird die Fehlerbehandlung in Schritt 208 beendet und das Verfahren wird in Fig. 9 in Schritt 158 fortgeführt.

War das Freirütteln nicht erfolgreich, so werden in einem Schritt 214 die Endlagen des Ventilstößels 66 angefahren. In Schritt 216 wird anschließend geprüft, ob das Anfahren der Endlagen erfolgreich war. Ist dieses der Fall, so wird die Fehlerbehandlung in Schritt 208 beendet und das Verfahren wird in Fig. 9 in Schritt 158 fortgeführt.

War das Anfahren der Endlagen nicht erfolgreich, so wird ein Fehlersignal in Schritt 218 ausgegeben und die Fehlerbehandlung in Schritt 220 beendet.

Fig. 12 zeigt den Schritt 168 aus Fig. 9 im Detail. Schritt 168 beinhaltet den Betriebsmodus des Ventils 30. Der Betriebsmodus wird in einem Schritt 222 gestartet. Anschließend wird in einem Schritt 224 die Spannung der Konstantstromquelle 94 erfasst. In Schritt 226 wird dann die erfasste Spannung auf ihren Wert hin geprüft. Ist die Spannung gleich der gewünschten Versorgungsspannung, dann wird zum nächsten Schritt 228 übergegangen. In bevorzugten Ausführungsformen ist die gewünschte Spannung, die Spannung des Bordnetzes mit 12 V.

In Schritt 228 wird die Temperatur des Motors 82 über die Schnittstelle 124 erfasst. Die Temperatur wird anschließend in Schritt 230 ausgewertet. Entspricht die Temperatur den gewünschten Vorgaben, so kann das Ventil 66 gemäß einer Steuerungsanforderung geöffnet werden. Dies erfolgt in einem Schritt 232. Wird in Schritt 230 erkannt, dass die Temperatur nicht den geforderten Spezifikationen entspricht, so wird der Betriebsmodus erneut gestartet und in Schritt 224 weitergeführt.

In Schritt 234 erfolgt eine weitere Überprüfung der Spannung der Konstantstromquelle 94, wenn das Ventil 66 geschlossen werden soll. Liegt die gewünschte Spannung an, so wird das Ventil in Schritt 236 geschlossen.

Anschließend kann das gesamte Verfahren in Schritt 238 beendet werden.

Führt die Überprüfung der Spannung der Konstantstromquelle 94 in Schritt 226 dazu, dass die Spannung nicht gleich der gewünschten Spannung ist, wird eine Notabschaltung in Schritt 240 ausgelöst. Dem schließt sich die Ausgabe eines Fehlersignals in Schritt 242 an und der Betrieb des Ventils 66 wird dann in Schritt 244 beendet.

In gleicher Weise erfolgt dies bei einer fehlerhaften Spannung in Schritt 234. Hier wird in dem Schritt 240' ebenfalls eine Notabschaltung ausgelöst. Dies wird von der Ausgabe eines Fehlersignals 242' gefolgt. Anschließend wird der Betrieb des Ventils 30 in dem Schritt 244' beendet.

Insgesamt wird der Betriebsmodus als Zyklus ausgeführt, sofern keine Notabschaltung erfolgt. Der Zyklus beginnt nach Schritt 236 und führt das Verfahren wieder auf den Schritt 224 zurück.

## Patentansprüche

1. Ventil (30) für eine landwirtschaftliche Spritzmaschine (10), das eine Durchflussmenge eines Spritzmittels (20) in Abhängigkeit einer Ventilstellung steuern kann, mit einem elektrisch betriebenen Aktuator (82) zum Einstellen der Ventilstellung, mit einem elektrischen Energiespeicher (108), der elektrische Energie zum Betreiben des Aktuators (82) bereitstellt, und mit einer Steuer- und Auswerteeinheit (46), die dazu ausgebildet ist, den elektrischen Energiespeicher (108) zu laden und den Aktuator (82) anzusteuern, **dadurch gekennzeichnet, dass** der Energiespeicher (108) eine Kapazität besitzt, die mindestens zwei und bevorzugt mindestens drei Schaltvorgänge gewährleistet, wobei die Steuer- und Auswerteeinheit (46) eine Flimmersteuerung (136) aufweist, die den Aktuator (82) derart ansteuert, dass er eine periodische Bewegung mit einer definierten Anzahl an Bewegungshüben und einer definierten Amplitude ausführt.

2. Ventil (30) nach Anspruch 1, **dadurch gekennzeichnet, dass** die Steuer- und Auswerteeinheit (46) den Energiespeicher (108) über eine Ladezeitdauer lädt, die wesentlich länger ist als die Entladezeitdauer beim Betätigen des Aktuators (82).

3. Ventil (30) nach einem der Ansprüche 1 oder 2, **gekennzeichnet durch** einen schaltbaren elektrischen Bypass (148), der eine Stromversorgung (94) mit dem Aktuator (82) verbinden kann.

4. Ventil (30) nach einem der Ansprüche 1 bis 3, **dadurch gekennzeichnet, dass** der Aktuator (82) ein Elektromotor (82) ist.

5. Ventil (30) nach einem der Ansdprüche 1 bis 4, **gekennzeichnet durch** ein Ventilgehäuse (34), in dem die Steuer- und Auswerteeinheit (46) und der Aktuator (82) angeordnet sind.

6. Ventil (30) nach einem der Ansprüche 1 bis 5, **dadurch gekennzeichnet, dass** die Steuer- und Auswerteeinheit (46) den elektrischen Energiespeicher (108) aufweist.

7. Ventil (30) nach einem der Ansprüche 1 bis 6, **dadurch gekennzeichnet, dass** die Steuer- und Auswerteeinheit (46) dazu ausgebildet ist, die Ventilstellung zu bestimmen.

8. Ventil (30) nach einem der Ansprüche 1 bis 7, **dadurch gekennzeichnet, dass** das Ventil (30) ohne Rückstellfeder ausgebildet ist.

9. Ventil (30) nach einem der Ansprüche 1 bis 8, **dadurch gekennzeichnet, dass** die Steuer- und Auswerteeinheit (46) einen Fehlerdetektor (142) aufweist, der dazu ausgebildet ist, die Stromversorgung des Ventils (30) zu prüfen.

10. Ventil (30) nach einem der Ansprüche 1 bis 9, **dadurch gekennzeichnet, dass** die Steuer- und Auswerteeinheit (46) eine BUS-Schnittstelle (144) aufweist.

11. Ventil (30) nach einem der Ansprüche 1 bis 10, **gekennzeichnet durch** eine Diagnoseeinrichtung (138), die dazu ausgebildet ist, eine Betriebsbereitschaft der Steuer- und Auswerteeinheit (46) zu prüfen.

12. Ventil (30) nach einem der Ansprüche 1 bis 11, **gekennzeichnet durch** eine Anzeigeeinheit (146).

13. Spritzdüsenmodul mit einer Spritzdüse (22), mit einem Spritzdüsenhalter und mit einem Ventil (30) nach einem der Ansprüche 1 bis 12, wobei das Ventil (30) mit dem Spritzdüsenhalter und der Spritzdüse (22) zusammenwirkt.

## Claims

1. A valve (30) for an agricultural spraying machine (10), said valve being able to control a flow rate of a spray medium (20) in accordance with a valve position and comprising an electrically operated actuator (82) for setting the valve position, with an electrical energy store (108) which provides electrical energy for operating the actuator (82), and with a control and evaluation unit (46) which is configured to charge the electrical energy store (108) and to control the actuator (82), **characterized in that** the energy store (108) has a capacity that ensures at least two and preferably at least three switching operations, wherein the control and evaluation unit (46) comprises a flicker control (136) that controls the actuator (82) in such a way that it performs a periodic movement with a defined number of movement strokes and a defined amplitude.

2. The valve (30) according to claim 1, **characterized in that** the control and evaluation unit (46) charges the energy store (108) over a charging period that is considerably longer than the discharging period upon activation of the actuator (82).

3. The valve (30) according to one of claims 1 or 2, **characterized by** a switchable electrical bypass (148) which can connect a power supply (94) to the actuator (82).

4. The valve (30) according to one of claims 1 to 3, **characterized in that** the actuator (82) is an electric motor (82).

5. The valve (30) according to one of claims 1 to 4, **characterized by** a valve housing (34) in which the control and evaluation unit (46) and the actuator (82) are arranged.

6. The valve (30) according to one of claims 1 to 5, **characterized in that** the control and evaluation unit (46) comprises the electrical energy store (108).

7. The valve (30) according to one of claims 1 to 6, **characterized in that** the control and evaluation unit (46) is configured to determine the valve position.

8. The valve (30) according to one of claims 1 to 7, **characterized in that** the valve (30) is designed without a return spring.

9. The valve (30) according to one of claims 1 to 8, **characterized in that** the control and evaluation unit (46) comprises a fault detector (142) which is designed to check the power supply of the valve (30).

10. The valve (30) according to one of claims 1 to 9, **characterized in that** the control and evaluation unit (46) comprises a BUS interface (144).

11. The valve (30) according to one of claims 1 to 10, **characterized by** a diagnosis arrangement (138) which is designed to check a readiness for operation of the control and evaluation unit (46).

12. The valve (30) according to one of claims 1 to 11, **characterized by** a display unit (146).

13. A spray nozzle module comprising a spray nozzle (22), with a spray nozzle holder and a valve (30) according to one of claims 1 to 12, wherein the valve (30) cooperates with the spray nozzle holder and the spray nozzle (22).

## Revendications

1. Soupape (30) pour une machine de pulvérisation agricole (10), laquelle peut réguler un débit d'un produit à pulvériser (20) en fonction d'une position de soupape, comprenant un actionneur à commande électrique (82) pour régler la position de soupape, comprenant un accumulateur d'énergie électrique (108) qui fournit de l'énergie électrique pour faire fonctionner l'actionneur (82), et comprenant une unité de commande et d'évaluation (46) qui est conçue pour charger l'accumulateur d'énergie électrique (108) et pour commander l'actionneur (82), **caractérisée en ce que** l'accumulateur d'énergie (108) présente une capacité qui garantit au moins deux et de préférence au moins trois opérations de commutation, l'unité de commande et d'évaluation (46) comprenant une commande de papillotement (136) qui commande l'actionneur (82) de telle sorte qu'il effectue un mouvement périodique présentant un nombre défini de courses de mouvement et une amplitude définie.

2. Soupape (30) selon la revendication 1, **caractérisée en ce que** l'unité de commande et d'évaluation (46) charge l'accumulateur d'énergie (108) pendant une durée de charge qui est nettement plus longue que la durée de décharge lors de l'actionnement de l'actionneur (82).

3. Soupape (30) selon l'une des revendications 1 et 2, **caractérisée par** une dérivation électrique commutable (148) qui peut connecter une alimentation en courant (94) à l'actionneur (82).

4. Soupape (30) selon l'une quelconque des revendications 1 à 3, **caractérisée en ce que** l'actionneur (82) est un moteur électrique (82).

5. Soupape (30) selon l'une quelconque des revendications 1 à 4, **caractérisée par** un boîtier de soupape (34) dans lequel sont disposés l'unité de commande et d'évaluation (46) et l'actionneur (82).

6. Soupape (30) selon l'une quelconque des revendications 1 à 5, **caractérisée en ce que** l'unité de commande et d'évaluation (46) comprend l'accumulateur d'énergie électrique (108).

7. Soupape (30) selon l'une quelconque des revendications 1 à 6, **caractérisée en ce que** l'unité de commande et d'évaluation (46) est réalisée pour déterminer la position de soupape.

8. Soupape (30) selon l'une quelconque des revendications 1 à 7, **caractérisée en ce que** la soupape (30) est réalisée sans ressort de rappel.

9. Soupape (30) selon l'une quelconque des revendications 1 à 8, **caractérisée en ce que** l'unité de commande et d'évaluation (46) comprend un détecteur de défauts (142) qui est conçu pour contrôler l'alimentation en courant de la soupape (30).

10. Soupape (30) selon l'une quelconque des revendications 1 à 9, **caractérisée en ce que** l'unité de commande et d'évaluation (46) comprend une interface de bus (144).

11. Soupape (30) selon l'une quelconque des revendications 1 à 10, **caractérisée par** un dispositif de diagnostic (138) qui est conçu pour contrôler une disponibilité opérationnelle de l'unité de commande et d'évaluation (46).

12. Soupape (30) selon l'une quelconque des revendications 1 à 11, **caractérisée par** une unité d'affichage (146).

13. Module de buse de pulvérisation comprenant une buse de pulvérisation (22), comprenant un support de buse de pulvérisation et comprenant une soupape (30) selon l'une quelconque des revendications 1 à 12, dans lequel la soupape (30) coopère avec le support de buse de pulvérisation et la buse de pulvérisation (22).
